# EUROPEAN PATENT APPLICATION

(11) **EP 4 557 749 A1**
(43) Date of publication of application: **21.05.2025**
(21) Application number: 22952039.0
(22) Date of filing: 20.07.2022
(51) Int. Cl.: H04N 21/43, H04N 21/4363, H04N 21/436, H04N 21/422, G06F 3/0354, G06F 3/0488

(54) **DISPLAY DEVICE AND OPERATION METHOD THEREOF**

(71) Applicant: LG Electronics Inc., Yeongdeungpo-gu Seoul 07336 (KR)
(72) Inventor: MIN, Jeongeun, Seoul 06772 (KR)
(74) Representative: Schornack, Oliver
(86) International application number: PCT/KR2022/010631
(87) International publication number: WO 2024/019190

(57) **Abstract**

A display device according to an embodiment of the present disclosure may comprise: a wireless communication interface that receives an image signal corresponding to an image which a mobile terminal is playing back; a display that displays a mirroring image on the basis of the received image signal; and a controller that determines whether a touchpad mode event is detected, and when the touchpad mode event is detected, transmits touchpad mode information for switching the operation mode of the mobile terminal to the touchpad mode to the mobile terminal through the wireless communication interface.

## Description

### TECHNICAL FIELD

The present disclosure relates to a display device providing a screen mirroring service.

### BACKGROUND ART

Digital TV services using wired or wireless communication network are becoming popular. Such a digital TV service may provide various services that may not be provided by the existing analog broadcasting service.

For example, in the case of IPTV (Internet Protocol Television) or smart TV service, which is a digital TV service type, it may provide bidirectionality in which a user may actively select a type of viewing program and a viewing time. IPTV and smart TV services may provide various additional services such as Internet search, home shopping, online games, etc. on the basis of the bidirectionality.

In addition, recently, a multi-view function of providing an image of each application by executing two applications at the same time is being provided. The multi-view function may display a broadcast image on one screen and a mirroring image from a smartphone or smart pad on another screen.

However, in the related art, when receiving a notification or performing other operations on the smartphone or smart pad, the user has to hold the smartphone or smart pad in his or her hand to confirm the notification or perform the necessary operations.

In this case, there is an interference when viewing broadcast images such as sports games or movies.

### DISCLOSURE OF THE INVENTION

### TECHNICAL PROBLEM

An object of the present disclosure is to enable a screen of a mobile terminal transmitting a source image to be utilized as a touchpad when providing a screen mirroring service.

An object of the present disclosure is to provide a method for performing notification or manipulation of a mobile terminal that provides a mirroring service without any other interference while watching a broadcast image when executing a multi-view function.

### TECHNICAL SOLUTION

A display device according to an embodiment of the present disclosure may include a wireless communication interface configured to receive an image signal corresponding to an image that is playing on a mobile terminal, a display configured to display a mirroring image on the basis of the received image signal, and a controller configured to: determine whether a touchpad mode event is detected; and transmit touchpad mode information for switching an operation mode of the mobile terminal to a touchpad mode in the mobile terminal through the wireless communication interface when the touchpad mode event is detected.

A method for operating a display device according to an embodiment of the present disclosure may include: receiving an image signal corresponding to an image that is playing on a mobile terminal; displaying a mirroring image on the basis of the received image signal; determining whether a touchpad mode event is detected; and transmitting touchpad mode information for switching an operation mode of the mobile terminal to a touchpad mode in the mobile terminal when the touchpad mode event is detected.

### ADVANTAGEOUS EFFECTS

According to the embodiment of the present disclosure, the user may manipulate the mobile terminal without looking at the screen of the mobile terminal while watching the broadcast image in the mirroring state and the multi-view state.

Therefore, the user may enjoy the improved user experience by manipulating the mobile terminals without being interrupted while watching the broadcast.

### BRIEF DESCRIPTION OF THE DRAWINGS

Fig. 1 is a block diagram illustrating a configuration of a display device according to an embodiment of the present disclosure.
Fig. 2 is a block diagram illustrating a remote control device according to an embodiment of the present disclosure
Fig. 3 is a view illustrating an actual configuration of a remote control device according to an embodiment of the present disclosure.
Fig. 4 is a view illustrating an example of utilizing a remote control device according to an embodiment of the present disclosure.
Fig. 5 is a block diagram for explaining a configuration of a mobile terminal according to an embodiment of the present disclosure.
Fig. 6 is a sequence diagram for explaining a method for operating a system according to an embodiment of the present disclosure.
Fig. 7 is a view for explaining an example of displaying a mirroring image of the mobile terminal in a multi-view state according to an embodiment of the present disclosure.
Fig. 8 is a view for explaining touchpad mode information according to an embodiment of the present disclosure.
Fig. 9 is a view illustrating an example of touchpad mode release information according to an embodiment of the present disclosure.
Fig. 10 is a view for explaining a process of switching an operation mode of the mobile terminal according to an embodiment of the present disclosure.
Fig. 11 is a view for explaining a process of switching an operation mode of a mobile terminal according to another embodiment of the present disclosure.
Figs. 12a and 12b are views for explaining a process in which a mobile terminal operates in a touchpad mode and a process in which the touchpad mode is switched into a mirroring mode according to an embodiment of the present disclosure.
Figs. 13a and 13b are views for explaining one of a content image or a casting image is selected to change the operation mode of the mobile terminal in a multi-view state according to an embodiment of the present disclosure.
Fig. 14 is a view for explaining a menu screen on which the operation mode of the mobile terminal is set according to an embodiment of the present disclosure.

### MODE FOR CARRYING OUT THE INVENTION

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

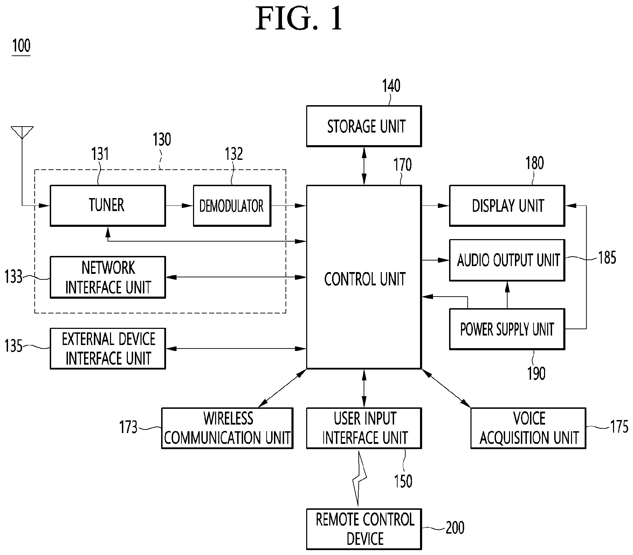

Fig. 1 is a block diagram illustrating a configuration of a display device according to an embodiment of the present disclosure.

Referring to Fig. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in Fig. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display 180 and the speaker 185.

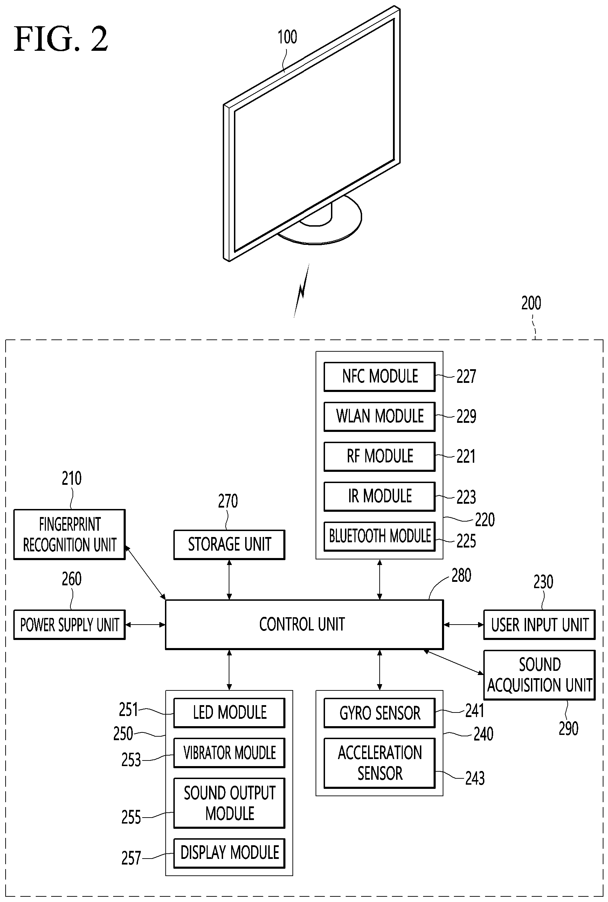

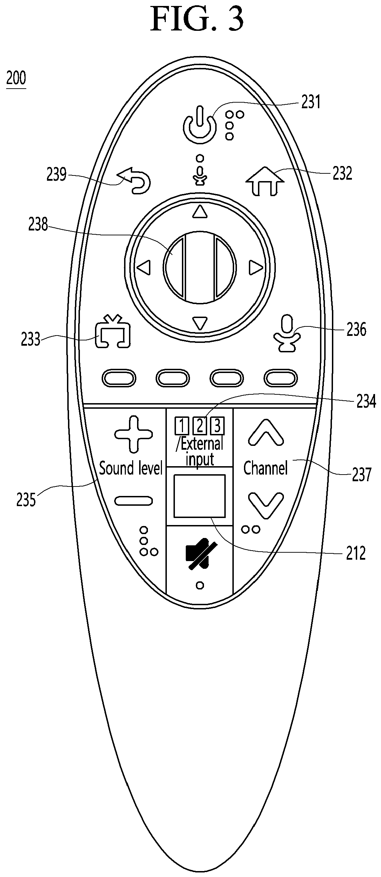

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to Fig. 2, the wireless communication interface 220 transmits/receives signals to/from an arbitrary any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmits/receives signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

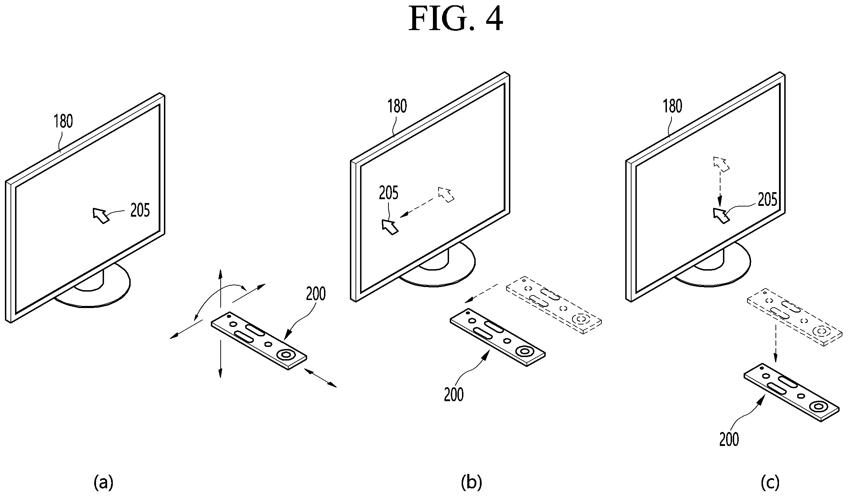

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement may not be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

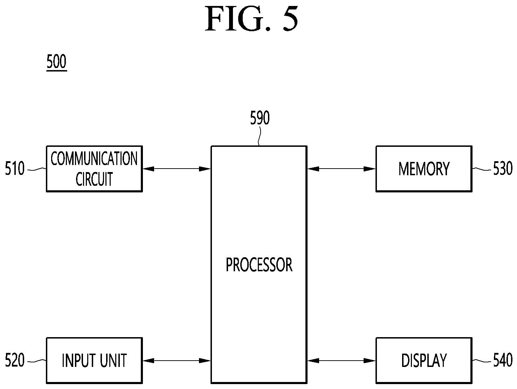

Fig. 5 is a block diagram for explaining a configuration of a mobile terminal according to an embodiment of the present disclosure.

A mobile terminal 500 may be implemented as a fixed or mobile device, such as a projector, a mobile phone, a smart phone, a desktop computer, a laptop, a digital broadcasting terminal, a personal digital assistant (PDA), a portable multimedia player (PMP), a navigation system, a tablet PC, a wearable device, a set-top box (STB), a DMB receiver, a radio, or a desktop computer.

Referring to Fig. 5, the mobile terminal 500 may include a communication circuit 510, an input unit 520, a memory 530, a display 540, and a processor 590.

The communication circuit 510 may transmit and receive data with external devices such as other mobile terminals or servers using wired or wireless communication technology.

The communication circuit 510 may perform communication using one of communication standards among global system for mobile communication (GSM), code division multi access (CDMA), long term evolution (LTE), 5G, wireless LAN (WLAN), wireless-Fidelity (Wi-Fi), Bluetooth, radio frequency identification (RFID), infrared data association (IrDA), ZigBee, and near field communication (NFC).

The input unit 520 may include a camera for inputting an image signal, a microphone for receiving an audio signal, a user input unit for receiving information from a user, etc.

Here, the camera or microphone may be treated as a sensor, and a signal obtained from the camera or microphone may be called sensing data or sensor information.

The memory 530 may store various software and data related to an operation of the mobile terminal 500.

The display 540 may display an image signal received from outside.

The processor 590 may control an overall operation of the mobile terminal 500.

When connection of an external device is required to perform the operation of the mobile terminal 500, the processor 590 may generate a control signal for controlling the external device and transmit the generated control signal to the external device.

The processor 590 may acquire intent information for the user input and determine the user's requirement on the basis of the acquired intent information.

The processor 590 may control at least some of the components of the mobile terminal 500 to run application program stored in the memory 170.

The processor 590 may combine and drive two or more of the components included in the mobile terminal 500 to drive the application program.

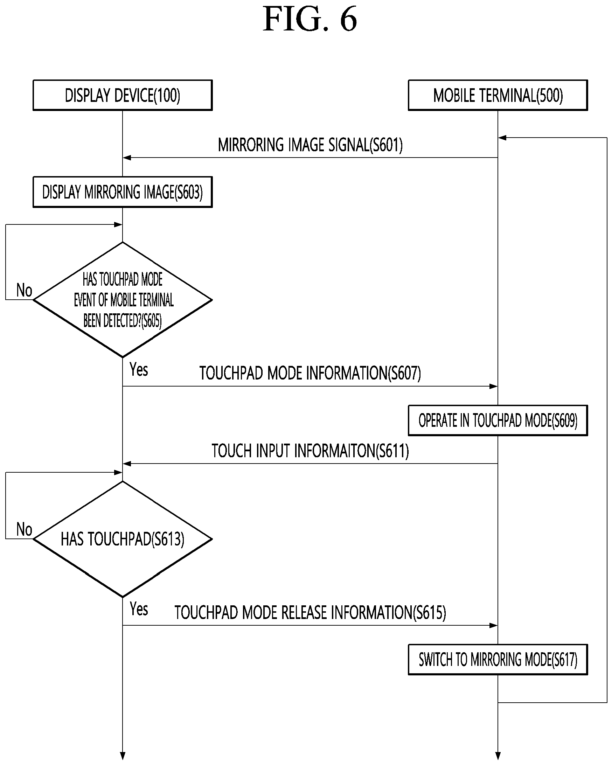

Fig. 6 is a sequence diagram for explaining a method for operating a system according to an embodiment of the present disclosure.

A system according to an embodiment of the present disclosure may include a display device 100 illustrated in Fig. 1 and a mobile terminal 500 illustrated in Fig. 5.

The display device 100 and the mobile terminal 500 may be connected to each other through a short-range wireless communication standard. The short-range wireless communication standard may be either a Wi-Fi standard or a Wi-Fi direct standard.

A processor 590 of the mobile terminal 500 transmits a mirroring image signal corresponding to an image being displayed on the display 540 to the display device 100 through a communication circuit 510 (S601).

The communication circuit 510 may include a Wi-Fi circuit that transmits the mirroring image signal through the Wi-Fi standard.

A controller 170 of the display device 100 displays a mirroring image on the basis of the received mirroring image signal on the display 180 (S603).

The controller 170 may convert a mirroring image signal to match a resolution of its own display 180 and display the converted mirroring image on the display 180.

In an embodiment, the controller 170 may display the mirrored image on an entire screen of the display 180. In some cases, an black image may be displayed at one side (left/right/top/bottom) to match the resolution.

In another embodiment, the display device 100 may have the multi-view function that is executing. The multi-view function may be a function that displays a plurality of images through a plurality of split screens. Each split screen may be an execution screen of an application.

When the display device 100 is executing in the multi-view function, the controller 170 may respectively display a content image and a mirrored image on the split screens.

In an embodiment, the content image may be a broadcast image resulting from an execution of a live broadcasting application.

The broadcast image may be an image received from a set-top box connected to an external device interface 135.

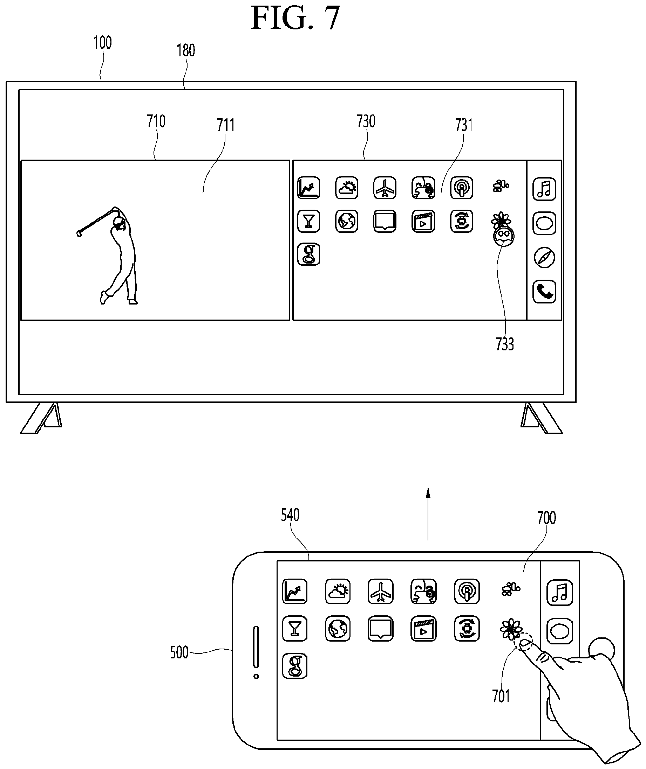

Fig. 7 is a view for explaining an example of displaying the mirroring image of the mobile terminal in a multi-view state according to an embodiment of the present disclosure.

Referring to Fig. 7, the display device 100 and the mobile terminal 500 are connected to each other through the Wi-Fi standard or the Wi-Fi direct standard.

The mobile terminal 500 may display a home screen image 700 on the display 540 and transmit a mirroring image signal corresponding to the home screen image 700 to the display device 100.

The display device 100 may display a content image 711 on a first split screen 710 and a mirroring image 731 on the basis of the mirroring image signal on a second split screen 730 according to the execution of the multi-view function.

The user of the mobile terminal 500 may apply a touch input to one point 701 of the display 540. The mobile terminal 500 may transmit coordinate information for the one point 701 to the display device 100. The display device 100 may display an indicator 733 corresponding to the one point 701 on the second split screen 730 on the basis of the received coordinate information.

An operation mode of the mobile terminal 500 may include a mirroring mode and a touchpad mode.

The mirroring mode may be a mode that is capable of controlling the mirroring image 730 according to the user's touch input during mirroring. Under the mirroring mode, the indicator 733 corresponding to the user's touch input may be displayed on the mirroring image 730.

Under the mirroring mode, a user's drag input may be reflected in the mirroring image 730 through the indicator 733.

The touchpad mode may be a mode in which the display 540 of the mobile terminal 500 is used as a touchpad during the mirroring. Even under the touchpad mode, the indicator corresponding to the user's touch input may be displayed on the mirrored image 730.

Under the touchpad mode, the user's drag input may be ignored, and only a touch down input or a touch up input may be recognized.

Fig. 7 illustrates an example of the mobile terminal 500 operating in the mirroring mode.

Again, Fig. 6 is explained.

The controller 170 of the display device 100 determines whether a touchpad mode event of the mobile terminal 500 is detected during the display of the mirroring image (S605).

In an embodiment, the controller 170 may detect the touchpad mode event of the mobile terminal 500 on the basis of information received from the mobile terminal 500.

The touchpad mode event may be an event for switching the operation mode of the mobile terminal 500 to the touchpad mode.

The controller 170 may detect the touchpad mode event of the mobile terminal 500 on the basis of movement information received from the mobile terminal 500. When the mobile terminal 500 determines that there is no movement of the mobile terminal 500 for a certain period of time, the movement information indicating the no movement may be transmitted to the display device 100.

The mobile terminal 500 may measure the movement of the mobile terminal 500 through a gyro sensor or acceleration sensor.

The controller 170 may determine that there is no movement of the mobile terminal 500 for a certain period of time on the basis of the received movement information and may determine that the touchpad mode event of the mobile terminal 500 is detected.

In another embodiment, the controller 170 may determine that the touchpad mode event of the mobile terminal 500 is detected when multi-touch input information is received from the mobile terminal 500. When two or more touch inputs are maintained for a certain period of time on the display 540 of the mobile terminal 500 that is being mirrored, the mobile terminal 500 may transmit the multi-touch input information indicating that the multi-touch input is generated to the display device 100.

In another embodiment, the controller 170 may detect the touchpad mode event of the mobile terminal 500 through a pop-up window. When providing the mirroring service together with the mobile terminal 500, the controller 170 may display the pop-up window on the display 180 that induces an operation of the mobile terminal 500 in the touchpad mode. The pop-up window may appear after the mirroring service is provided.

The controller 170 may determine that the touchpad mode of the mobile terminal 500 is detected when a confirmation button included in the pop-up window is selected.

When the touchpad mode event of the mobile terminal 500 is detected, the controller 170 of the display device 100 transmits touchpad mode information to the mobile terminal 500 through a wireless communication interface 173 (S607).

In an embodiment, the touchpad mode information may include information for switching the operation mode of the mobile terminal 500 to the touchpad mode.

The touchpad mode information may be information used to switch the operation mode of the mobile terminal 500 from the mirroring mode to touchpad mode.

The touchpad mode information may include a mode parameter for setting the operation mode of the mobile terminal 500 to the touchpad mode and a drag input parameter indicating whether a drag input is possible.

The touchpad mode information may further include a touch input parameter indicating whether a touch up/down input is possible.

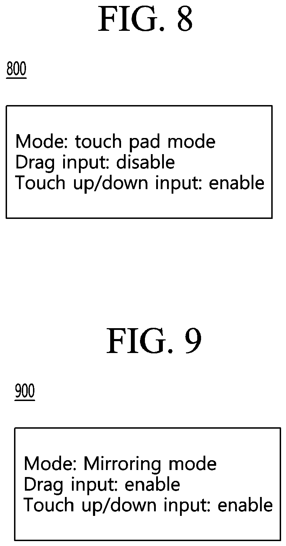

Fig. 8 is a view for explaining touchpad mode information according to an embodiment of the present disclosure.

Referring to Fig. 8, touchpad mode information 800 may include a mode parameter, a drag input parameter, and a touch up/down input parameter.

The mode parameter may have a touchpad mode value, which requests an operation in the touchpad mode.

The drag input parameter may have a disable value, which indicates that the drag input is not possible (or ignored).

The touch up/down input parameter may have an enable value indicating that the touch up/down input is possible.

Again, Fig. 6 is explained.

The processor 590 of the mobile terminal 500 operates the operation mode of the mobile terminal 500 in the touchpad mode on the basis of the received touchpad mode information (S609).

The processor 590 of the mobile terminal 500 may switch the operation mode of the mobile terminal 500 to the touchpad mode on the basis of the value of the mode parameter included in the received touchpad mode information.

The mobile terminal 500 may ignore the user's drag input under the touchpad mode. The mobile terminal 500 may only recognize the user's touch-up input and the touch-down input under the touchpad mode.

The user may only view the mirroring screen of the display device 100 to manipulate the mirroring screen.

The processor 590 of the mobile terminal 500 transmits the touch input information with respect to the touch input to the display device 100 through the communication circuit 510 (S611).

In an embodiment, the touch input information may include a touch-up input or a touch-down input and coordinate information of a point at which the inputs are received. The coordinate information may include position information of pixels included in the display 540 of the mobile terminal 500.

The controller 170 of the display device 100 determines whether a release event of the touchpad mode of the mobile terminal 500 is detected on the basis of touch input information (S613).

The controller 170 may select items included in the mirrored image on the basis of the touch input information. The items included in the mirroring image may be any one of an application icon or notification item corresponding to the application installed on the mobile terminal 500.

The release event of the touchpad mode may be an event to release the touchpad mode of the mobile terminal 500 and to be switched back to the mirroring mode.

The controller 170 may determine that the release event of the touchpad mode of the mobile terminal 500 is detected when a specific event occurs on the basis of the touch input information.

In an embodiment, the specific event may be an event of selecting an application icon included in the mirrored image. The application may be an application installed on the mobile terminal 500.

That is, the controller 170 may determine that the release event of the touchpad mode of the mobile terminal 500 is detected when the application icon included in the mirroring image is selected on the basis of the touch input information.

When the release event of the touchpad mode of the mobile terminal 500 is detected, the controller 170 of the display device 100 transmits touchpad mode release information to the mobile terminal 500 (S615).

The touchpad mode release information may include information for releasing the touchpad mode of the mobile terminal 500.

The touchpad mode release information may include information for switching the operation mode of the mobile terminal 500 to the mirroring mode.

Fig. 9 is a view illustrating an example of the touchpad mode release information according to an embodiment of the present disclosure.

Referring to Fig. 9, touchpad mode release information 900 may include a mode parameter, a drag input parameter, and a touch up/down input parameter.

The mode parameter may have a mirroring mode value, which requests an operation in the mirroring mode.

The drag input parameter may have an enable value, which indicates that drag input is possible.

The touch up/down input parameter may have an enable value indicating that the touch up/down input is possible.

Again, Fig. 6 is explained.

The processor 590 of the mobile terminal 500 switches the operation mode from the touchpad mode to the mirroring mode according to the touchpad mode release information received from the display device 100 (S617).

In this case, the display device 100 may display an indicator 733 illustrated in Fig. 7 at a position corresponding to a touch point received on the screen of the mobile terminal 500.

Hereinafter, an embodiment of the present disclosure will be described in more detail.

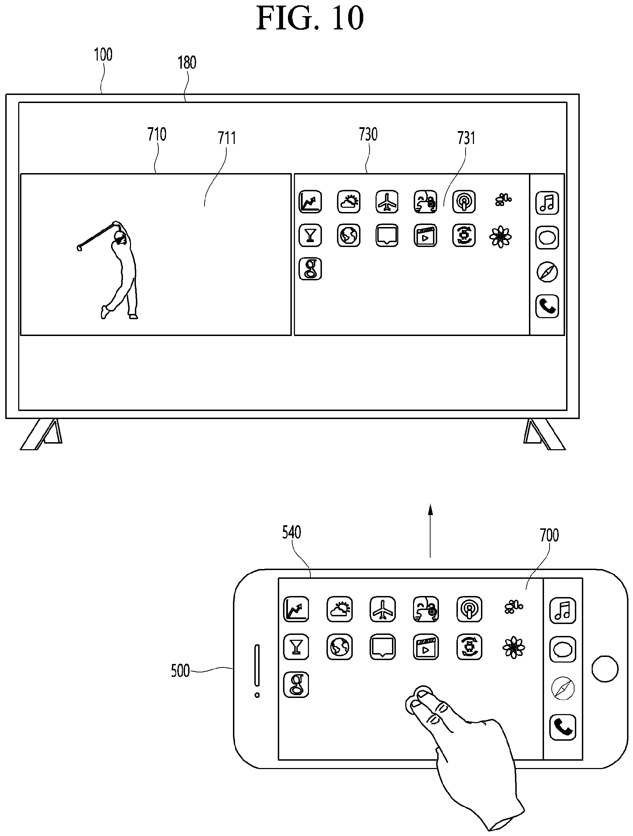

Fig. 10 is a view for explaining a process of switching the operation mode of the mobile terminal according to an embodiment of the present disclosure.

Referring to Fig. 10, the display device 100 and the mobile terminal 500 are connected to each other through the Wi-Fi standard or the Wi-Fi direct standard.

The mobile terminal 500 may display a home screen image 700 on the display 540 and transmit a mirroring image signal corresponding to the home screen image 700 to the display device 100.

The display device 100 may display a content image 711 on a first split screen 710 and a mirroring image 731 on the basis of the mirroring image signal on a second split screen 730 according to the execution of the multi-view function.

In Fig. 10, the mobile terminal 550 operates in the mirroring mode.

Referring to Fig. 10, the mobile terminal 500 may receive two long touch down/up inputs and transmit the received touch input information to the display device 100.

The display device 100 may determine that the touchpad mode event of the mobile terminal 500 is detected on the basis of two long touch down/up input information included in the received touch input information.

The display device 100 may transmit the touchpad mode information indicating the switching to the touchpad mode to the mobile terminal 500, and the mobile terminal 500 may switch the operation mode from the mirroring mode to the touchpad mode on the basis of the touchpad mode information.

In addition, when the mobile terminal 500 receives the two long touch down/up inputs while being switched to the touchpad mode, the mobile terminal 500 may switch the touchpad mode back to the mirroring mode.

As described above, according to an embodiment of the present disclosure, the user may easily switch the operation mode of the mobile terminal 500 with a simple multi-touch input. Thus, user convenience may be significantly improved.

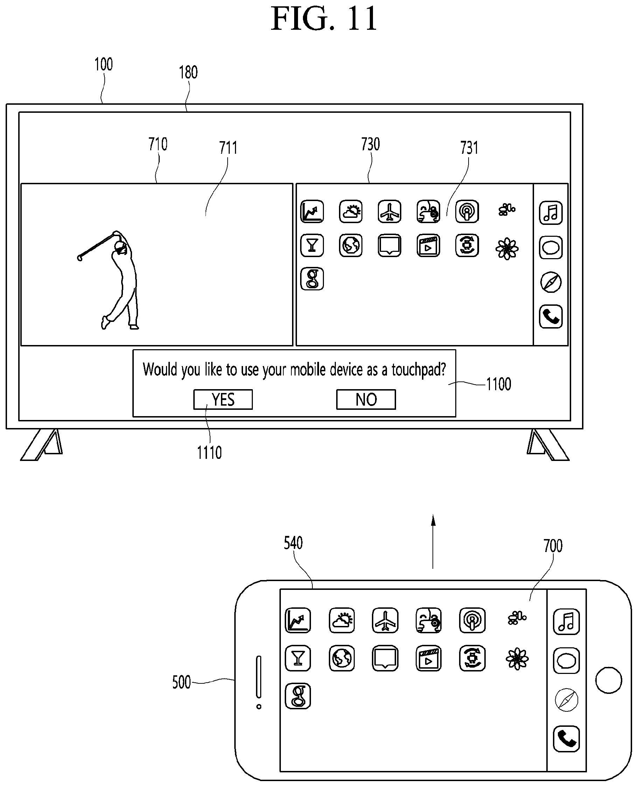

Fig. 11 is a view for explaining a process of switching an operation mode of a mobile terminal according to further another embodiment of the present disclosure.

Referring to Fig. 11, a display device 100 and a mobile terminal 500 are connected to each other through a Wi-Fi standard or a Wi-Fi direct standard.

The mobile terminal 500 may display a home screen image 700 on the display 540 and transmit a mirroring image signal corresponding to a home screen image 700 to the display device 100.

The display device 100 may display a content image 711 on a first split screen 710 and a mirroring image 731 on the basis of the mirroring image signal on a second split screen 730 according to the execution of the multi-view function.

When providing a mirroring service together with the mobile terminal 500, the display device 100 may display a pop-up window 1100 on a display 180 that induces switching of an operation mode of the mobile terminal 500 to a touchpad mode.

A pop-up window 1100 may be displayed on a first split screen 710 or a second split screen 730. As another example, the pop-up window 1100 may be displayed on an area other than the first split screen 710 or the second split screen 730.

The display device 100 may determine that a touchpad mode event is detected when receiving a command to select a confirmation button 1110 included in the pop-up window 1100. The display device 100 may transmit touchpad mode information to the mobile terminal 500 to switch the operation mode of the mobile terminal 500 to the touchpad mode according to the selection of the confirmation button 1110.

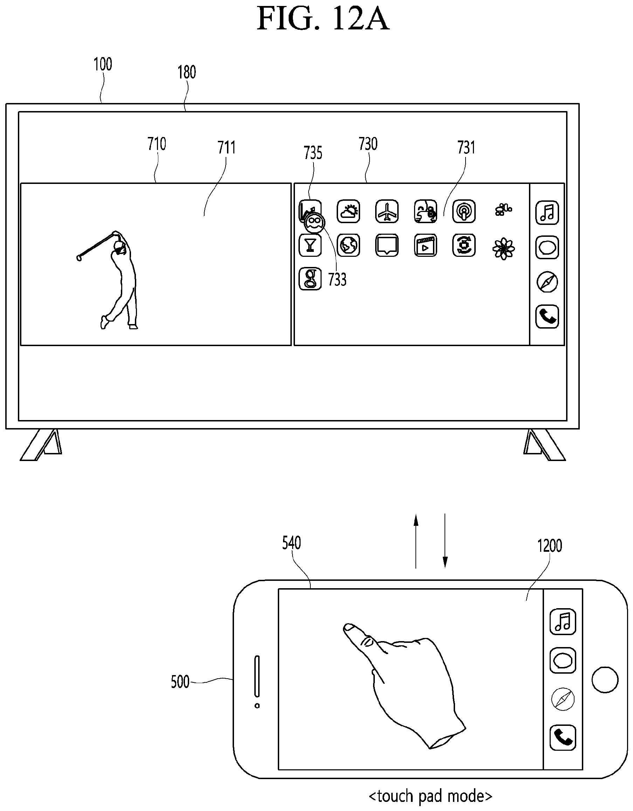

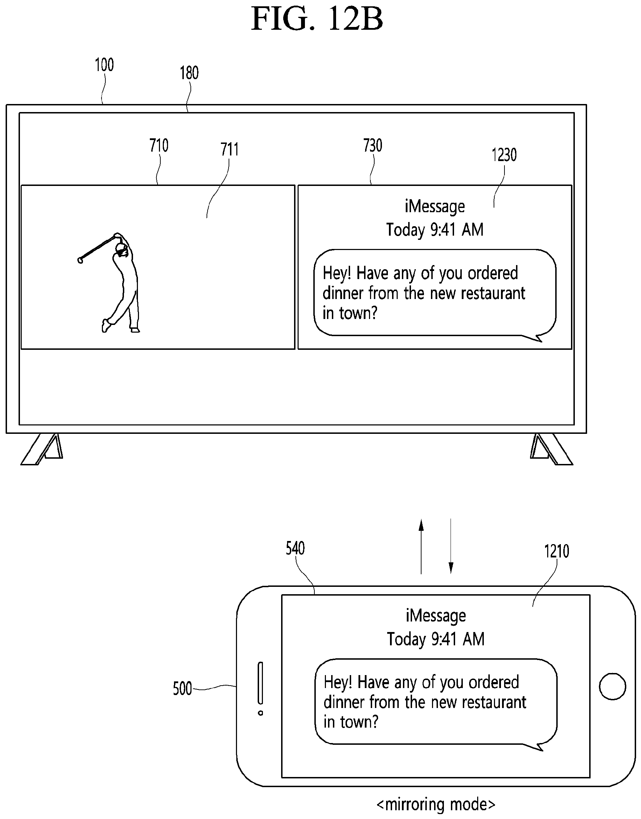

Figs. 12a and 12b are views for explaining a process in which the mobile terminal operates in the touchpad mode and a process in which the touchpad mode is switched into the mirroring mode according to an embodiment of the present disclosure.

Referring to Fig. 12a, the display device 100 and the mobile terminal 500 are connected to each other through a Wi-Fi standard or a Wi-Fi direct standard.

The mobile terminal 500 may display a home screen image 700 on the display 540 and transmit a mirroring image signal corresponding to a home screen image 700 to the display device 100.

The display device 100 may display a content image 711 on a first split screen 710 and a mirroring image 731 on the basis of the mirroring image signal on a second split screen 730 according to the execution of the multi-view function.

The display device 100 may transmit touchpad mode information to the mobile terminal 500 according to an occurrence of the touchpad mode event.

The mobile terminal 500 may switch the operation mode to the touchpad mode according to the received touchpad mode information. At the same time, the mobile terminal 500 may display a blank screen 1200 on which no application icon is displayed. This is to inform the user that the mobile terminal 500 is in the touchpad mode. In addition, this is to avoid visual interference with the user's touch input due to the display of the application icon.

The user may apply the touch down/up input on the blank screen 1200. That is, while watching a content image 710, the user may apply the touch down/up input on the display 540 of the mobile terminal 500 that is operating in the touchpad mode.

The mobile terminal 500 may output a haptic signal when the touch down/up input is applied to a point at which an icon of a specific application is disposed for a certain period of time.

The display device 100 may display an indicator 733 on a mirrored image 730 at a position corresponding to the point on the basis of the touch down/up input information received from the mobile terminal 500. The indicator 733 may be displayed at a position corresponding to a user's touch point.

The display device 100 may display the indicator 733 at the corresponding position when the touch down input is received from the mobile terminal 500 for a certain period of time or more.

The display device 100 may select a message icon 735 corresponding to a message application in which the indicator 733 is disposed on the basis of the touch input information received from the mobile terminal 500.

The message application may be an application installed on the mobile terminal 500.

The display device 100 may determine that a release event of the touchpad mode is detected when the message application is running.

That is, when the display device 100 detects an execution of an application on the basis of the touch input information received from the mobile terminal 500, the release event of the touchpad mode may be generated.

The display device 100 may transmit touchpad mode release information to the mobile terminal 500.

The mobile terminal 500 may switch the operation mode to the mirroring mode on the basis of the touchpad mode release information. The mobile terminal 500 may execute a message application corresponding to the message icon 735 as illustrated in Fig. 12b and display an execution image 1210 on the display 540.

The mobile terminal 500 may transmit an image signal corresponding to the execution image 1210 to the display device 100, and the display device 100 may display a mirroring image 1230 on the second split screen 730 on the basis of the received image signal.

As described above, the user may manipulate the mobile terminal without looking at the screen of the mobile terminal while watching a broadcast image in a mirroring state and a multi-view state.

Therefore, the user may enjoy the improved user experience by manipulating the mobile terminals without being interrupted while watching the broadcast.

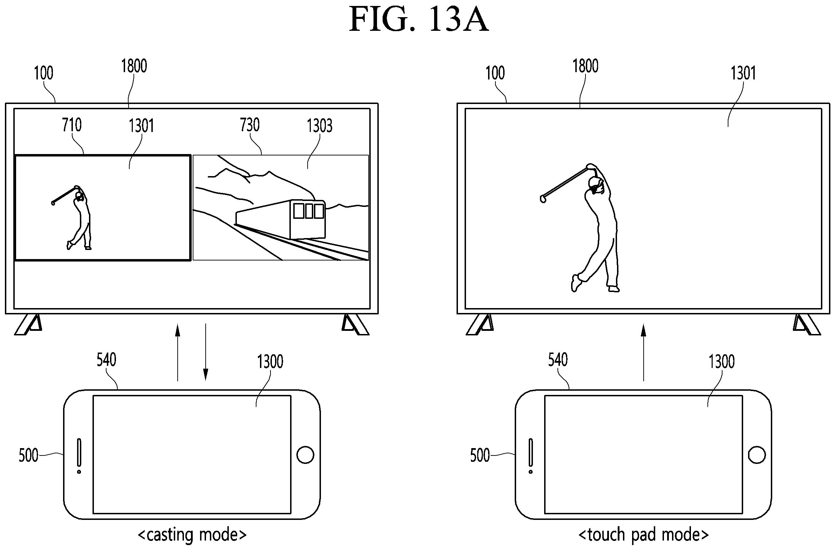

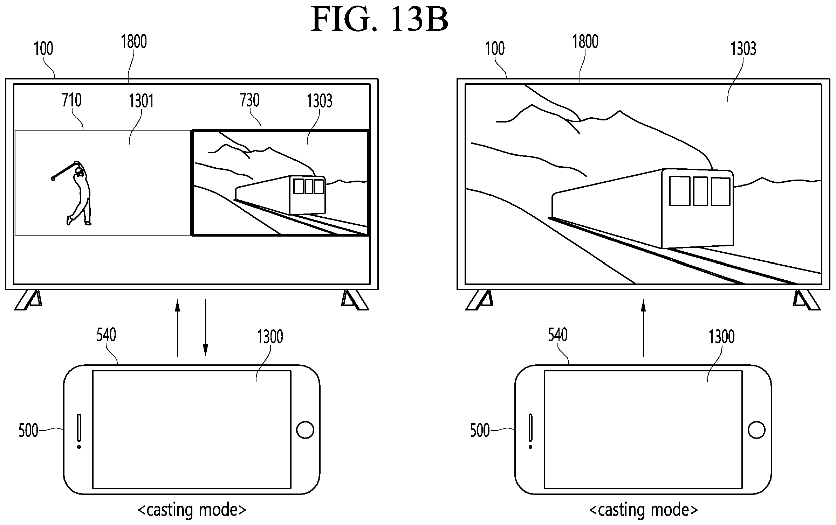

Figs. 13a and 13b are views for explaining one of a content image or a casting image is selected to change the operation mode of the mobile terminal in a multi-view state according to an embodiment of the present disclosure.

Referring to Fig. 13a, the mobile terminal 500 may have a screen turned off or may operate in a casting mode. The casting mode may be a mode similar to the mirroring mode described above. A difference from the mirroring mode is that, under casting mode, the mobile terminal 500 does not display the mirroring image.

The casting mode may be a mode in which an image being played on the mobile terminal 500 is transmitted to the display device 100 so that the display device 100 plays the image. Under the casting mode, the screen of the mobile terminal 500 may be turned off.

The display device 100 may display a broadcast image 1301 on the first split screen 710 and a casting image 1303 on the second split screen 730 according to the execution of the multi-view function. The casting image 1303 may be an image that is being played on the mobile terminal 500.

When the display device 100 receives a command to select the first split screen 710, it may transmit the touchpad mode information to the mobile terminal 500 to switch the operation mode of the mobile terminal 500 from the casting mode to the touchpad mode.

The display device 100 may display the broadcast image 1301 on the entire screen according to a command to select the first split screen 710. The mobile terminal 500 may switch the casting mode to the touchpad mode according to the touchpad mode information received from the display device 100.

The display device 100 may determine that the touchpad mode event is detected in the mobile terminal 500 when the first split screen 710 is selected.

The mobile terminal 500 that is operating in the touchpad mode may perform the same role as a remote control device 200.

Referring to Fig. 13b, unlike Fig. 13a, the display device 100 may receive a command to select the second split screen 730.

The display device 100 may display the casting image 1303 on the entire screen according to a command to select the second split screen 730.

In this case, the operation mode of the mobile terminal 500 may be maintained in the casting mode. This is to manipulate the casting image 1303 because the casting image 1303 is being displayed on the entire screen of the display device 100.

The casting mode in Figs. 13a and 13b may be used to be replaced with the mirroring mode.

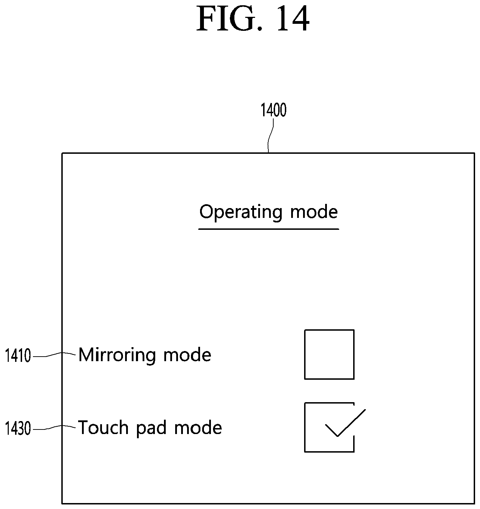

Fig. 14 is a view for explaining a menu screen on which the operation mode of the mobile terminal is set according to an embodiment of the present disclosure.

The display device 100 may display a menu screen 1400 for setting the operation mode of the mobile terminal 500 on the display 180 according to a command received from the remote control device 200.

The menu screen 1400 may include a first menu item 1410 for setting to the mirroring mode and a second menu item 1430 for setting to the touchpad mode.

The display device 100 may transmit information to the mobile terminal 500 to operate in the mirroring mode when the mirroring mode is checked through the first menu item 1410. The information may be the touchpad mode release information in Fig. 6.

The display device 100 may transmit the information to the mobile terminal 500 to operate in the touchpad mode when the touchpad mode is checked through the second menu item 1430. The information may be the touchpad mode information in Fig. 6.

As described above, according to an embodiment of the present disclosure, the user may easily set the operation mode of the mobile terminal 500 through the menu screen 1400.

According to the embodiments of the present disclosure, the above-described method may also be embodied as processor readable codes on a processor readable recording medium. Examples of the processor readable medium include read-only memory (ROM), random-access memory (RAM), CD-ROMs, magnetic tapes, floppy disks, and optical data storage devices.

The display device described above is not limited to the configuration and method of the embodiments described above, and the embodiments may be configured by selectively combining all or portion of the embodiments so that various modifications may be made.

## Claims

1. A display device comprising:
a wireless communication interface configured to receive an image signal corresponding to an image that is playing on a mobile terminal;
a display configured to display a mirroring image on the basis of the received image signal; and
a controller configured to: determine whether a touchpad mode event is detected; and transmit touchpad mode information for switching an operation mode of the mobile terminal to a touchpad mode in the mobile terminal through the wireless communication interface when the touchpad mode event is detected.

2. The display device according to claim 1, wherein the touchpad mode information comprises:
a mode parameter for setting the operation mode of the mobile terminal to the touchpad mode; and
a drag input parameter that indicates impossibility of a drag input.

3. The display device according to claim 1, wherein the controller is configured to detect the touchpad mode event on the basis of the information received from the mobile terminal.

4. The display device according to claim 3, wherein the controller is configured to determine that the touchpad mode event is detected when movement information indicating that there is no movement of the mobile terminal for a certain period of time is received from the mobile terminal.

5. The display device according to claim 3, wherein the controller is configured to determine that the touchpad mode event is detected when multi-touch input information indicating that two or more touch inputs are maintained for a certain period of time is received from the mobile terminal.

6. The display device according to claim 1, wherein the controller is configured to:
display a pop-up window on the display that induces an operation in the touchpad mode; and
determine that the touchpad mode event is detected through the pop-up window.

7. The display device according to claim 1, wherein the controller is configured to:
receive touch input information from the mobile terminal after the operation mode of the mobile terminal is set to the touchpad mode by the touchpad mode information; and
detect a touchpad mode release event that indicates release of the touchpad mode on the basis of the received touch input information.

8. The display device according to claim 7, wherein the controller is configured to determine that the touchpad mode release event is detected when an application icon contained in the mirroring image is selected on the basis of the touch input information.

9. The display device according to claim 8, wherein the controller is configured to transmit touchpad mode release information that indicates the release of the touchpad mode to the mobile terminal.

10. The display device according to claim 9, wherein the controller is configured to:
receive an execution image of an application corresponding to the application icon from the mobile terminal; and
display the received execution image on the display.

11. The display device according to claim 9, wherein the touchpad mode release information comprises:
a mode parameter for setting the operation mode of the mobile terminal to a mirroring mode; and
a drag input parameter that indicates possibility of a drag input.

12. The display device according to claim 1, wherein the controller is configured to display the content image on a first split screen and the mirroring image on a second split screen according to an execution of a multi-view function.

13. The display device according to claim 12, wherein the controller is configured to:
receive touch input information from the mobile terminal; and
display an indicator at a position of the mirroring image corresponding to one point of the received touch input on the display of the mobile terminal on the basis of the received touch input information.

14. The display device according to claim 12, wherein the controller is configured to determine that the touchpad mode event is detected on the mobile terminal when the first split screen is selected.

15. A method for operating a display device, the method comprising:
receiving an image signal corresponding to an image that is playing on a mobile terminal;
displaying a mirroring image on the basis of the received image signal;
determining whether a touchpad mode event is detected; and
transmitting touchpad mode information for switching an operation mode of the mobile terminal to a touchpad mode in the mobile terminal when the touchpad mode event is detected.
